# EUROPEAN PATENT APPLICATION

(11) **EP 2 730 761 A1**
(43) Date of publication of application: **14.05.2014**
(21) Application number: 12192437.7
(22) Date of filing: 13.11.2012
(51) Int. Cl.: F01N 3/022

(54) **Diesel particulate filter having three-way catalyst coating**

(71) Applicant: International Engine Intellectual Property Company, LLC, Lisle, Illinois 60532 (US)
(72) Inventor: Luis Carlos Cattani, IL Illinois, 60504 Aurora (US); Michael Uchanski, IL Illinois, 60657 Chicago (US); Rogelio Rodriguez, IL Illinois, 60544 Plainfield (US); James R. Cigler, IL Illinois, 60441 Lockport (US); Matthew Joseph Seiberlich, IL Illinois, 60048 Libertyville (US); Jeremy Grant Schipper, IL Illinois, 60647 Chicago (US); Jer-Sheng Jason Chen, IL Illinois, 60564 Naperville (US); Dileep Khadilkar, IL Illinois, 60564 Naperville (US); Nishant Singh, IL Illinois, 60188 Carol Stream (US); Jaoa P. Silva, IL Illinois, 60564 Naperville (US); Silpa Mandarapu, IL Illinois, 60490 Bolingbrook (US)
(74) Representative: Kuhnen & Wacker

(57) **Abstract**

Apparatus described herein relate to a diesel particulate filter (65) for use in a diesel engine exhaust system. The diesel particulate filter (65) comprises a particulate filter substrate (75)having a plurality of filter flow channels (80) configured to remove diesel exhaust particulates from a diesel exhaust stream. The plurality of filter flow channels (80) are disposed for contact with the diesel exhaust stream and are coated with a three-way catalyst coating (90). The three-way catalyst coating (90) may be configured to assist in soot oxidation during regeneration events as well as for the reduction of NOₓ from the exhaust stream. The three-way catalyst coating (90) may replace, or be used in addition to, a three-way catalyst of a diesel oxidation catalyst (60).

## Description

### BACKGROUND

Emissions from diesel engines and their impact on the environment are of increasing concern given the number that are currently deployed. Such engines are used in electric generators, vehicle engines, and the like. With this concern comes increasing government regulations that limit the amount of various emission gases that may be exhausted to the environment. One such undesirable emission gas is NOₓ.

The amount of NOₓ exhausted from a diesel engine is dependent on the air-to-fuel ratio used to run the engine, along with several other factors such as the combustion temperatures, the amount of oxygen introduced to the cylinders, etc. Engines that operate solely under steady-state conditions are typically run using a lean bum mixture having a high air-to-fuel ratio. Desired torque, fuel economy and containable NOₓ emissions can be achieved through combustion optimization. However, during transient conditions, such as vehicle acceleration in order to get the quick response to get to the desired torque, NOx containment becomes challenging. During such transients, since more work is required to meet the torque demands, the Exhaust Gas Recirculation (EGR) rate is intentionally lowered to divert the hot combusted gas energy to the turbochargers. The decrease in EGR however results in increased NOx emissions. If the ideal exhaust species concentration is available under such conditions, the after-treatment system can be used to decrease this NOₓ with the right PGM formulation and coating.

### SUMMARY

Apparatus described herein relate to a diesel particulate filter for use in a diesel engine exhaust system. The diesel particulate filter comprises a particulate filter having a plurality of filter flow channels configured to remove diesel exhaust particulates from a diesel exhaust stream. The plurality of filter flow channels are disposed for contact with the diesel exhaust stream and are coated with a three-way catalyst coating.

Another apparatus described herein relates to an exhaust system for a diesel engine. The exhaust system comprises a flow path configured to conduct a flow of exhaust gases from a diesel engine core, wherein the exhaust gases includes NOₓ and hydrocarbons in addition to the other exhaust gas species. A diesel oxidation catalyst receives the flow of exhaust gases from the flow path and reduces the amount of hydrocarbons in the exhaust gas. A diesel particulate filter receives a flow of the exhaust gases from the diesel oxidation catalyst. The diesel particulate filter includes a particulate filter having a three-way catalyst coating configured to contact the flow of exhaust gases passing through the diesel particulate filter to reduce the amount of NOₓ in the exhaust gas.

Further apparatus herein relate to a diesel engine system. The diesel engine system comprises a diesel engine core including one or more igniters respectively associated with one or more cylinders. An air/fuel mixer is configured to control an air-to-fuel ratio of fuel ignited by the one or more igniters in the respective one or more cylinders. The air/fuel mixer is further configured to enrich the air-to-fuel ratio in response to transient operation of the diesel engine system. The diesel engine system further comprises an after-treatment exhaust system that is configured to receive exhaust gases generated in the one or more cylinders. The after-treatment exhaust system includes a particulate filter coated by a three-way catalyst, wherein the coating is configured to contact exhaust gases passing through the particulate filter.

### BRIEF DESCRIPTION OF THE DRAWINGS

FIG. 1 illustrates a diesel engine system having an after-treatment exhaust system that includes a particulate filter coated by a three-way catalyst, wherein the coating is configured to contact exhaust gases passing through the particulate filter

FIG. 2 is a schematic cross-sectional view taken along a longitudinal axis of an exemplary particulate filter that includes a three-way catalyst coating.

### DETAILED DESCRIPTION

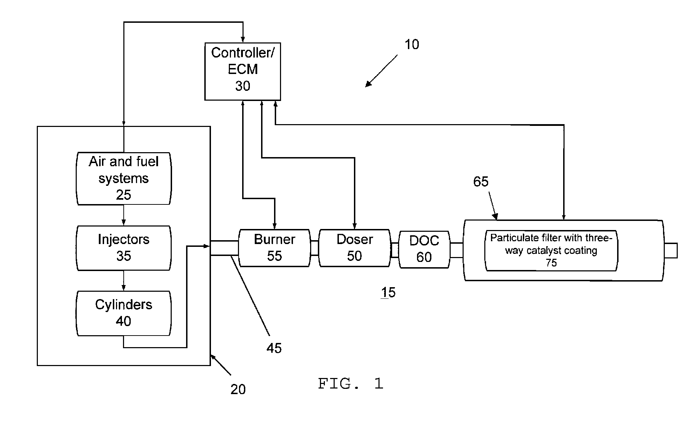

FIG. 1 illustrates a diesel engine system 10 having an after-treatment exhaust system 15 and a diesel engine core 20. The diesel engine core 20 is configured to burn fuel which is used to drive the system 10. To this end, the diesel engine core 20 includes an air/fuel system 25 that is under the control of a controller/ECM 30. The ECM 30 controls the air-to-fuel ratio for combustion within cylinders 40. The air-to-fuel ratio may have a stoichiometric relationship, or leaner, during steady-state operation of the diesel engine core 20. However, during transient operation, the air-to-fuel ratio is controlled so that it provides a richer mixture to the igniters 35 to increase the amount of power for the diesel engine core 20 to respond to the transients.

The cylinders 40 provide a diesel exhaust stream to the after-treatment exhaust system 15 through, for example, a conduit, such as a pipe 45. The diesel exhaust stream has a number of pollutants, including NOₓ. Among other apparatus, the after-treatment exhaust system 15 may include a doser 50 receiving the diesel exhaust stream and a burner 55 disposed upstream of the doser 50. When activated by the ECM 30, the doser 50 is configured to inject fuel into the exhaust stream. This fuel may then chemically react over a diesel oxidation catalyst (DOC) 60 to elevate the temperature of the exhaust gas that will be entering into the diesel particulate filter 65. For example, fuel may be injected into the exhaust stream and combusted under certain driving conditions and/or for the oxidation of soot that has accumulated in the DPF 65, also referred to as a regeneration event. However, according to certain embodiments, in addition to or in lieu of, fuel may also be dosed into the exhaust stream by or at the burner 55. This is generally done to increase the temperature the exhaust gas at the inlet of the DOC 60 so that the fuel injected from the doser 50 can chemically react over the DOC 60.

The DOC 60 is configured for chemically converting pollutants in the exhaust stream. For example, the DOC 60 may contain palladium and platinum which serve as catalysts to oxidize hydrocarbons and carbon monoxide into carbon dioxide and water in the following reactions:

CO + ½O₂ → CO₂;

and

[HC] + O₂ → CO₂ + H₂O.

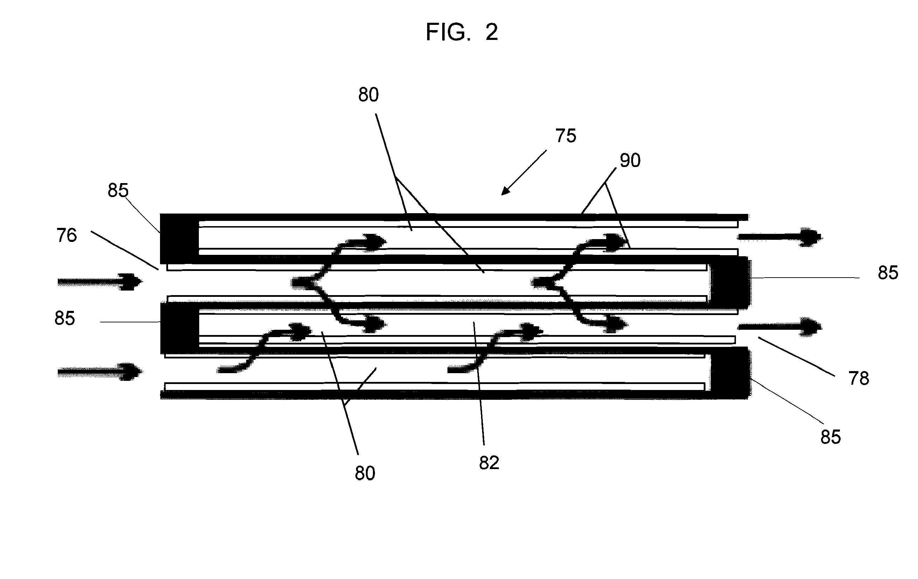

The exhaust stream may pass from the DOC 60 to the DPF 65. The DPF 65 may include a particulate filter substrate 75 that may be constructed in a number of different manners. For example, according to certain embodiments, the particulate filter substrate 75 may have a wall-flow filter or wall-flow monolith configuration, an exemplary cross-sectional view of which is shown in FIG. 2. The wall-flow configuration for the particulate filter substrate 65 may be a cylindrical ceramic structure having a plurality of relatively small, parallel channels 80 running in the axial direction. The ceramic structure typically has a precisely controlled porosity. Adjacent channels 80 in the wall-flow filter 75 are alternatively plugged 85 at each end thus forcing the exhaust gas to flow through the porous walls which act as a filter medium that removes particulate matter, such as soot, from the exhaust stream. The flow of exhaust gases from the exhaust stream through the particulate filter substrate 75 is shown by the flow arrows of FIG 2.

A three-way catalyst coating 90 is disposed over the surfaces of the particulate filter substrate 75 that contact the diesel exhaust stream. In FIG. 2, the majority, if not all, of the surfaces of the channels 80 are coated with the three-way catalyst coating 90. However, according to certain embodiments, the three-way catalyst coating 90 may alternatively be placed only over limited surfaces of the channels 80. For example, the coating 90 may be limited to surfaces proximate the inlet and/or outlet portions 76, 78 of the particulate filter 75. In other constructions, only certain channels 80 may be coated. Still further, the coating 90 may be limited to a mid-section 82 of the particulate filter 75. Other configurations for coating the particulate filter 75 are also contemplated.

The composition of the three-way catalyst coating 90 is such that it removes an amount of NOₓ from the diesel exhaust stream. To this end, the three-way catalyst coating 90 may include various amounts of a precious metal, such as, for example, platinum, palladium, and rhodium, as well as an oxygen storage catalyst. Such precious metals may also be selected for assistance in oxidizing soot during a regeneration event in the DPF 65. For example, according to certain embodiments, three-way catalyst coating 90 may include adding rhodium to a precious metal formulation that is used for regeneration so as to provide a formulation that allows for soot oxidation while also assists in NOₓ reduction.

In addition to effectively removing substantial amounts of NOₓ, the three-way catalyst coating 90 may also reduce the temperature at which accumulated soot is effectively removed from the wall-flow filter 75 during filter regeneration in comparison to the temperature at which accumulated soot is effectively removed from a non-coated wall-flow filter of similar construction. More specifically, in comparison with bare DPFs, a three-way catalyst coating 90 on the DPF 65 may reduce the activation energy of the soot oxidation reaction and allow for higher soot oxidation rates, thereby promoting cleaning of the DPF 65. Further, since DPFs are often larger than DOCs, the particulate filter substrate 75 of the DPF 65 may have a three-way catalyst coating 90 that provides a considerably larger volume of three-way catalyst than is typically attainable in after-treatment exhaust systems. Such an increase in the volume of the three-way catalyst in the after-treatment exhaust system 15, and particularly in the particulate filter substrate 75, may increase the residence times that the exhaust gas are exposed to the three-way catalyst, as well as increasing the contact area of the three-way catalyst coating 90, and thereby further assist in maximizing the NOₓ reducing reactions rates and the amount of NOₓ reduction. Although the coated DPF 65 may remove NOₓ during lean, steady-state operation of the diesel engine core 20, it is particularly effective during transients in which richer fuel mixtures are used. According to certain embodiments, the inclusion of the three-way coating 90 in the DPF 65 may be in addition to, or in lieu of, a three-way catalyst coating in the DOC 60. Accordingly, in embodiments in which the DOC 60 includes a three-way catalyst coating, the addition of a three-way coating 90 in the DPF 65 may further assist in reducing NOₓ levels.

While various examples of the methods and apparatus have been illustrated and described, it should be appreciated that the principles associated with each of the disclosed examples may be extended while still falling within the scope of the following claims.

## Claims

1. A diesel particulate filter for use in a diesel engine exhaust system comprising:
a particulate filter having a plurality of filter flow channels configured to remove diesel exhaust particulates from a diesel exhaust stream;
a three-way catalyst coating disposed on surfaces of the plurality of filter flow channels for contact with the diesel exhaust stream; and

2. The diesel particulate filter of claim 1 or 2, wherein the particulate filter is a wall-flow filter.

3. The diesel particulate filter of claim 1 or 2, wherein the three-way catalyst coating is disposed on surfaces of the plurality of filter flow channels proximate an inlet of the particulate filter.

4. The diesel particulate filter of any of the preceding claims, wherein the three-way catalyst coating is disposed on surfaces of the plurality of filter flow channels proximate an outlet of the wall-flow filter.

5. The diesel particulate filter of any of the preceding claims, wherein the three-way catalyst coating reduces the temperature at which accumulated soot is effectively removed from the wall-flow filter during filter regeneration in comparison to the temperature at which accumulated soot is effectively from a non-coated wall-flow filter of similar construction.

6. The diesel particulate filter of any of the preceding claims, wherein the three-way catalyst coating has a chemical composition that reacts with the NOₓ to reduce the amount of the NOx in the diesel exhaust stream.

7. An exhaust system for a diesel engine comprising:
a flow path configured to conduct a flow of exhaust gases from a diesel engine core, wherein the exhaust gases includes NOₓ and hydrocarbons;
a diesel oxidation catalyst configured to receive the flow of exhaust gases from the flow path and to reduce the amount of hydrocarbons in the exhaust gas; and
a diesel particulate filter configured to receive a flow of the exhaust gases from the diesel oxidation catalyst, wherein the diesel particulate filter includes a particulate filter having a three-way catalyst coating configured to contact the flow of exhaust gases passing through the diesel particulate filter to reduce the amount of NOₓ in the exhaust gas.

8. The exhaust system of claim 7, wherein the particulate filter is a wall-flow filter.

9. The exhaust system of claim 7 or 8, wherein the three-way catalyst coating is disposed on a substrate of the wall-flow filter proximate an inlet thereof.

10. The exhaust system of any one of claims 7 to 9, wherein the three-way catalyst coating is disposed on a substrate of the wall-flow filter proximate an outlet thereof.

11. The exhaust system of any one of claims 7 to 10, wherein the three-way catalyst coating is configured to reduce the temperature at which accumulated soot is removed from the wall-flow filter during filter regeneration in comparison to the temperature at which accumulated soot is removed from a non-coated wall-flow filter of similar construction.

12. The exhaust system of any one of claims 7 to 11, wherein the diesel oxidation catalyst is disposed between a fuel doser and the diesel particulate filter.

13. The exhaust system of any one of claims 7 to 12, wherein the diesel oxidation catalyst includes a three-way catalyst coating.

14. A diesel engine system comprising:
a diesel engine core including one or more igniters respectively associated with one or more cylinders;
an air/fuel mixer configured to control an air-to-fuel ratio of fuel ignited by the one or more igniters in the respective one or more cylinders, wherein the air/fuel mixture is further configured to enrich the air-to-fuel ratio in response to transient operation of the diesel engine system;
an after-treatment exhaust system configured to receive exhaust gases generated in the one or more cylinders, wherein the after-treatment exhaust system includes a particulate filter coated by a three-way catalyst, and wherein the three-way catalyst coating is configured to contact exhaust gases passing through the particulate filter to reduce NOₓ in the exhaust gases.

15. The exhaust system of claim 14, where the DOC has a three way catalyst coating.
